# EUROPEAN PATENT APPLICATION

(11) **EP 2 338 649 A2**
(43) Date of publication of application: **29.06.2011**
(21) Application number: 10191995.9
(22) Date of filing: 22.11.2010
(51) Int. Cl.: B25G 1/10

(54) **Handle of a hand tool and method for manufacturing the handle**

(30) Priority: 26.11.2009 FI 20096245
(71) Applicant: Fiskars Brands Finland OY AB, 10330 Billnäs (FI)
(72) Inventor: Golledge, Graham, Bridgend, Mid Glamorgan CF31 4LQ (GB)
(74) Representative: Holmström, Stefan Mikael

(57) **Abstract**

The present invention relates to a handle of a hand tool and a method for manufacturing the same. The handle comprises a rigid core (2) and one more gel members (4) on at least part of the core member (2). According to the invention the one or more gel members (4) and the rigid core (2) are mechanically bonded together for securing the one or more gel members (4) to the rigid core (2).

## Description

### FIELD OF THE INVENTION

The present invention relates to handle of a hand tool and more particularly to a handle of a hand tool comprising a rigid core and one or more gel members on at least part of the core member. The present invention further relates to a method for manufacturing a handle of a hand tool comprising a rigid core and one or more gel members on at least part of the core member.

### BACKGROUND OF THE INVENTION

Hand tools, such as shovels, pruners, loppers, axes or the like, are generally made of rigid plastics or metals and are thus hard to touch. Rigid and hard materials of the hand tools make the use of the hand tools uncomfortable and cause pressure and shocks to user hands. To solve the problems relating to rigid and hard materials of the hand tools and particularly to handles of the hand tools areas of softer materials are provided to handles of the hand tools. Conventionally handles with soft touch properties are provided with areas of soft materials such as thermoplastic elastomer (TPE). These conventional materials are injection moulded on the rigid core of a handle such that the bon between the rigid core and the soft material is good and substantially no peeling off of the soft material occurs. The problem with these conventional soft materials is that the recommended thickness of the soft material on the rigid core is very thin. Thus the conventional soft materials do not provide any shock absorption. Furthermore, conventional soft materials have high friction, which causes blisters to users in many applications. Lately these areas of softer materials are provided by using soft gel materials. These gel materials are applied in various hand tools, such as garden tools and toothbrushes to make it comfortable to use these hand tools. The gel material is usually formed on one or more areas of the handle or on the whole handle. The advantage of the gel materials is that they have good shock absorption properties.

One of the problems associated to these handles of the hand tools having area or areas of gel material is that the gel material tends to become detach from the rigid core material of the handle hand tool to which they are secured. In the prior art the gel materials are secured to the rigid core material with an adhesive. Furthermore, because the gel materials are generally very sticky they have self-adhesive properties. The gel materials remain fairly good attached to the rigid core material when they are subjected to pressure forces. On the other hand when a shear force is directed to gel material during the use of the hand tool the gel material tends to become detached or peeled off from the rigid core material. The shear force directs the stress substantially parallel to the surface of the rigid core and the gel material. The weakest point is usually the boundary layer between the rigid core and the gel material causing the gel material to become detached from the rigid core under shear forces.

### BRIEF DESCRIPTION OF THE INVENTION

An object of the present invention is thus to provide a handle of the hand tool and a method for manufacturing a handle of a hand tool as to overcome the above disadvantages of the prior art. The objects of the present invention are achieved by a handle of a hand tool according to claim 1 and by a method according to claim 13.

The preferred embodiments of the invention are disclosed in the dependent claims.

The invention is based on the idea that the rigid core of a handle of a hand tools and the gel member are secured together mechanically. The mechanical bond between the rigid core and the gel member is implemented by providing the rigid core with projections projecting outwards from the surface of the rigid core. The projections are provided to form undercuts which the one or more gel elements fill for providing a mechanical bond between the rigid core and the one or more gel members. In other words the projections project into the one or more gel members for providing a mechanical bond between the rigid core and the one or more gel members by the undercuts formed with the projections. Alternatively the rigid core comprises one or more cavities extending into the rigid core from the surface of the rigid core. Also the cavities are provided to form undercuts which the one or more gel elements fill for providing a mechanical bond between the rigid core and the one or more gel members. In other words the one or more gel members project into the cavities for providing a mechanical bond between the rigid core and the one or more gel members by the undercuts formed with the cavities.

The advantage of the present invention is that the mechanical bond between the rigid core and the gel member prevents the gel member to be come detached from the rigid core. The mechanical bond eliminates the smooth boundary layer between the rigid core and the gel member and thus prevents shear forces from detaching the gel member from the rigid core. Therefore the mechanical bond enables gel members to be used in various work tools where they previously have not been used because of the tendency of the gel member to become detached from the rigid core.

### BRIEF DESCRIPTION OF THE DRAWINGS

In the following the invention will be described in greater detail by means of preferred embodiments with reference to the accompanying drawings, in which

Figure 1 shows a handle of a hand tool according to the present invention;

Figure 2 shows a cross section of the handle of figure 1 along the line A-A of figure 1;

Figure 3 shows an end view of the handle of figure 1;

Figure 4 shows a cross section of the handle of figure 1 along the line B-B of figure 3;

Figure 5 shows the rigid core of the handle of figure 1;

Figure 6 shows an axonometric view of the handle of figure 1; and

Figure 7 shows an end of a shovel shaft to which the handle of figure 1 may be mounted.

### DETAILED DESCRIPTION OF THE INVENTION

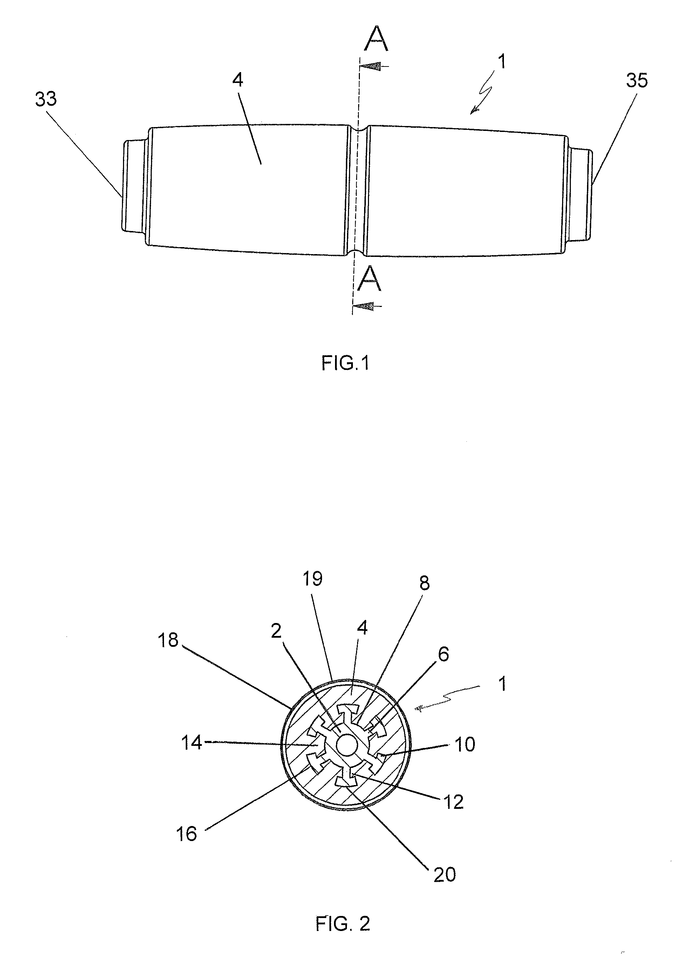

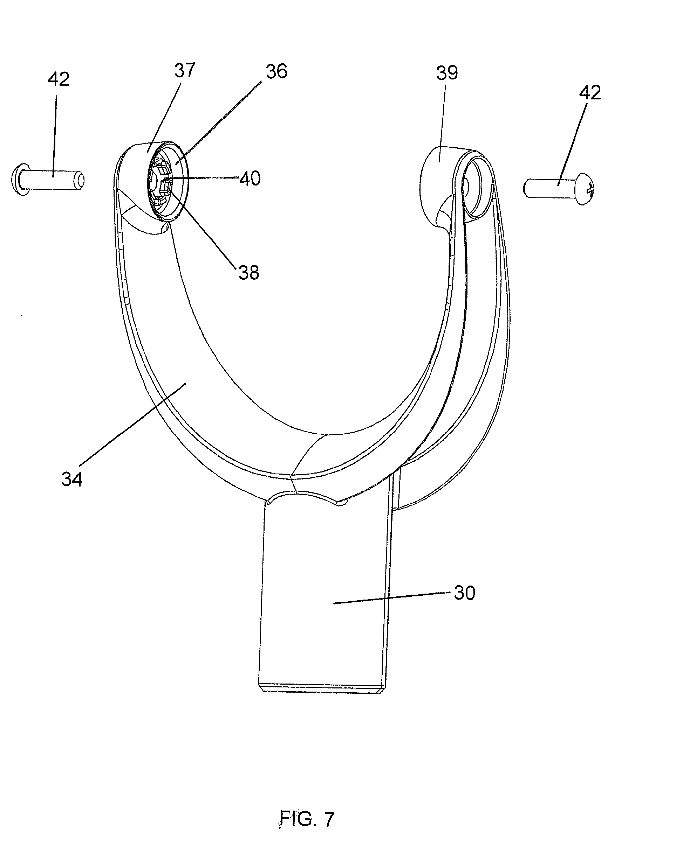

Figure 1 is shows one embodiment of a handle 1 of the hand tool. The handle 1 is only an exemplary embodiment of a handle and it should be understood that the handle of a hand tool may be implemented in various ways and it may take various forms. The handle 1 of figure 1 illustrates a handle of a shovel the handle 1 being arranged to be mounted or attached to an end of a shaft of a shovel according to figure 7. The handle 1 of figure 1 is cylindrical, preferably symmetrically cylindrical, and has an elongated shape.

Figure 2 shows a cross sectional vies of the handle 1 along line A-A of figure 1. As seen from the figure 2 the handle 1 comprises a rigid core 2 and a gel member 4 surrounding rigid core 2 and provided on the surface 8, 16 of the rigid core 2. In the embodiment of figure 2 the gel member 4 is arranged to radially surround the rigid core 2 such that the gel member 4 is provided over the whole surface 8, 16 of the rigid core 2, except on the end faces 5 of the rigid core 2. However, it should be noted that the handle 1 of figures 1 to 7 is only an exemplary embodiment and that the gel member 4 may also be provided on only a part of the surface 8, 16 of the rigid core 2. Furthermore, in some embodiments there may be two or more separate gel members 4 provided on one rigid core 2.

The rigid core 2 may be manufactured of material selected from the group consisting of plastics, metals, glass fibres, ceramics or a combination of one or more thereof. Thus the rigid core 2 may be manufactures for example of aluminium, polypropylene or composite comprising polypropylene and glass fibres. The present invention is not limited to any material of rigid core, but any material having enough rigidity for a handle material may be used to form the rigid core 2.

The gel member 4 is manufactured from a gel material. Generally gel material is a solid jelly-like material that can have properties ranging from soft and weak to hard and tough. One definition for gel materials define them as a substantially dilute crosslinked materials exhibiting no flow when in the steady-state. By weight, gel materials are mostly liquid, but they behave like solids due to a three-dimensional crosslinked network within them. It is the crosslinks within the gel materials that give them their structure and contribute to stickiness of gel materials. The gel members 4 of the present invention may be manufactured for example of material selected from the group consisting of urethane, polyurethane, silicon and/or other polymer based gel material.

According to the present invention the gel member 4 and the rigid core 2 are bonded together mechanically for securing and attaching the gel members 4 to the rigid core 2. The mechanical bond between the gel member 4 and the rigid core 2 is provided in this embodiment by forming undercuts 12 to the rigid core 2. The undercuts 12 are formed to the rigid core 2 such that the gel material of the gel member 4 fills the undercuts 12 as shown in figure 2. The undercuts 12 are provided such that the undercuts 12 are formed in a direction from the rigid core 2 towards the surface 19 of the gel member 4. Preferably the undercuts 12 are formed in a direction substantially perpendicular to the surface 19 of the gel member 4. The term undercut 12 means a space provided with the shape of the rigid core 2 between the surface 8 of the rigid core 2 and the surface 19 of the gel member 4, the space being filled with the gel material of the gel member 4.

Figure 2 shows one embodiment of the present invention in which the rigid core 2 comprises one or more projections 6 projecting outwards from the surface 8 of the rigid core 2 into the one or more gel members 4 for providing a mechanical bond between the rigid core 2 and the one or more gel members 4. The projections 6 are shaped such that they form undercuts 12 which the one or more gel elements 4 fill for providing a mechanical bond between the rigid core 2 and the one or more gel members 4. As can be seen from figure 2 the projections 6 are provided with flanges 10 or the like extending transversely from the projections 6 such that they provide undercuts 12 which the one or more gel elements 4 fill for providing a mechanical bond between the rigid core 2 and the one or more gel members 4. In figure 2 the flanges 10 are connected to the rigid core 2 by the projections 6, and the flanges 10 are provided to the distal end of the projections 6, but alternatively the flanges 10 could be provided between the proximal and distal end of the projections 6. The flanges 10 are provided to extend transversely to the normal of the surface 19 of the gel member 4 and preferably substantially parallel with the surface 19 of the gel member 4. It should also be noticed that the projections 6 or the flanges of the projections 10 may be separated parts, such as pins or the like, attached to the rigid core 2 or projections 6, respectively.

In an alternative embodiment the undercuts 12 are formed by cavities 14 and flanges 10 provided to the rigid core 2. Thus the rigid core 2 comprises one or more cavities 14 extending into the rigid core 2 from the surface 16 of the rigid core 2. The cavities 14 are filled by the one or more gel members 4 for providing a mechanical bond between the rigid core 2 and the one or more gel members 4. The cavities 14 are provided to form undercuts 12 which the one or more gel elements 4 fill for providing a mechanical bond between the rigid core 2 and the one or more gel members 4. Accordingly the cavities 14 have side cuttings forming space providing undercuts 12 in the same manner as projections 6.

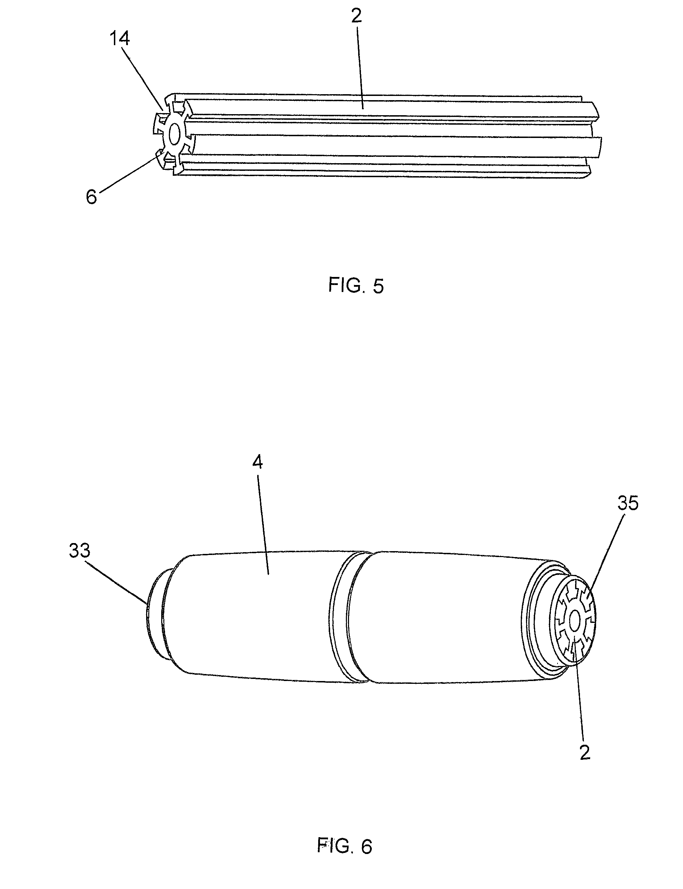

According to the above mentioned the projections 6 or cavities 14 form undercuts 12 providing mechanical bonding between the rigid core 2 and the gel member 4. Furthermore, the rigid core 2 of the handle 1 may be provided to form one or more projections 6 or cavities 14. The rigid core 2 may also be provided with both projections 6 and cavities 14. Often the handle 1 is an elongated handle 1 having a longitudinal axis. In that case the projections 6 and/or the cavities 14 extend substantially parallel with the longitudinal axis of the handle, as is shown in figure 5. This provides mechanical bond over the whole length of the gel member 4. Furthermore, during use the gel member 4 is often subjected to rotational force as the hand of a user directs a compression force to the gel member 4 simultaneously with a torsion force around the longitudinal axis of the handle 1. When the projections 6 or cavities 14 extend along the length of the longitudinal axis of the handle 1 the gel member 4 is effectively prevented from becoming detached from the rigid core 2. In an alternative embodiment of the present invention the projections 6 or the cavities 14 may be arranged to extend circumferentially around the rigid core. This is particularly advantageous in a handle which is subjected to a force directed along the longitudinal axis of the rigid core 2. Furthermore, the projections 6 or cavities 14 may be arranged in an alternative manner and they may also be pin-like or corresponding. All the projections 6 or cavities 14 are arranged to form mechanical bond between the gel member 4 and the rigid core 2. The gel member 4 may additionally be arranged to cover the entire rigid core 2 or the entire handle 1 or only a part of the rigid core 2 or the handle 1. The projections 6 and the cavities 14 are preferably formed only to the part of the rigid core 2 on which the gel member 4 is arranged.

In a preferred embodiment of the present invention the gel member 4 is further provided with an outer cover layer 18. The outer cover layer 18 surrounds the entire gel member 4 encapsulating the gel member 4. Therefore the outer cover layer 18 forms the surface of the gel member 4. Gel materials are generally sticky and have high friction. Therefore, when a gel member 4 is provided to a handle it may be uncomfortable to use because the users hand cannot slide on the gel material but sticks to the gel member 4. The high friction of the gel material causes blisters and abrasions to the hands of the user. To prevent this, the outer cover layer 18 is formed to have lower friction than the one or more gel members 4. The outer cover layer 18 may be manufactured of material selected from the group consisting of urethane, polyurethane, silicon and/or other polymer based material. The friction of the outer cover layer 18 may due to the manufacturing process or the material chosen fro the outer cover layer 18, or both.

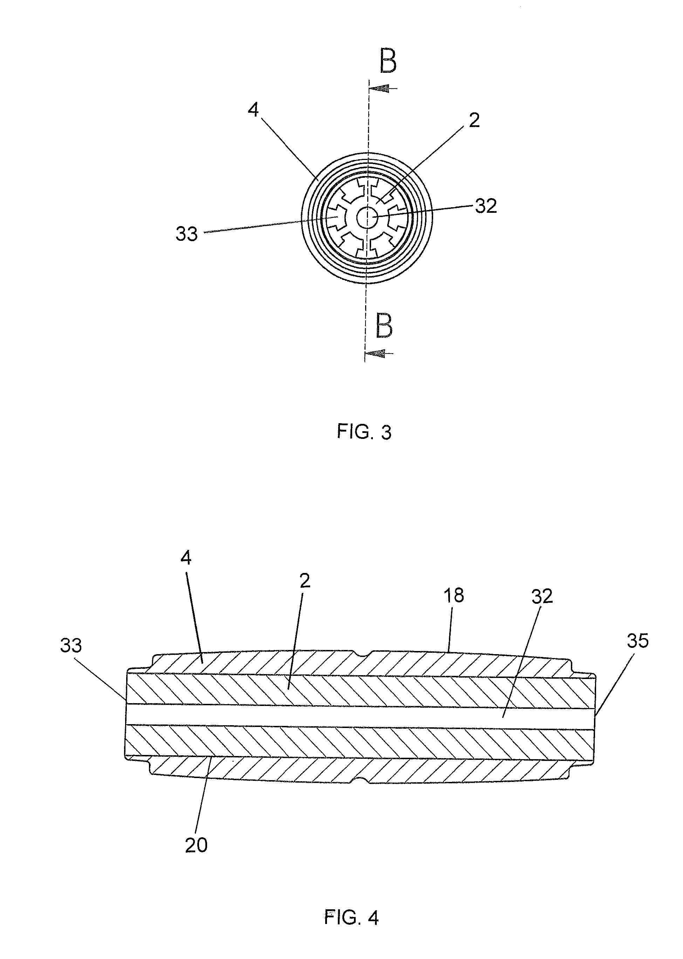

In the present invention the gel member 4 is attached to the rigid core 2 by mechanical bond. The gel materials are sticky as such and thus have some adhesion properties. But in an embodiment in which the handle is subjected to considerable stress and forces an adhesive layer 20 may be provided between rigid core 2 and the gel member 4 for enhancing the bonding between the rigid core 2 and the one or more gel members 4, as shown in figure 4. Any suitable adhesive may used to form the adhesive layer.

The handle 1 shown in figure 1 to 6 is a handle of a shovel. Figure 7 shows an upper end of a shovel shaft 30. Figure 6 shows an axonometric view of the handle 1, figure 3 shows an end view of the handle and figure 4 shows a cross section of the handle along the line B-B of figure 3. As can be seen from figure 4 the rigid core 2 is provided with a central bore 32 extending through the rigid core 2 in the longitudinal direction of the rigid core 2. The central bore 32 may be provided with threads at least in the proximity of the ends 33 and 35 of the rigid core 2. The upper end of the shovel shaft 30 is provided with a branch part 34. The handle 1 is arranged to be mounted to the open part of the branch part 34 between the branch ends 37 and 39. The branch ends 37 and 39 are further provided with mounting sleeves 36 facing to each other. The mounting sleeves 36 are dimensioned such that they receive the ends 33 and 35 of the handle 1 within them. The mounting sleeves 36 are further provided with mounting fins 38. The mounting fins 38 are arranged in on circumferential arrangement such that they have gaps 40 between them. The mounting fins 38 and the gaps 40 between them are arranged to match with the shape of the rigid core 2 at the ends 33 and 35 of the rigid core, as shown in figure 3. Therefore when the handle 1 is mounted the branch part 34 of the shovel shaft 30 between branch ends 37 and 39 the mounting fins 38 protrude to cavities 14 or between the projections 6 thus locking the handle 1 to the branch part 34. This locking will prevent the handle from rotating in the branch part 34 when mounted in place. The gel material of the gel member 4 is substantially soft and elastic. Therefore, when the handle 1 is mounted to branch part 34 the mounting fins 38 protrude into the gel member 4 between the projections 6 and push the gel material away causing al local deformation of the gel material. As shown in figure 7, the handle 1 may be further attached to the branch part using screws, bolts 42 or the like. If the central bore 32 of the rigid core 2 is provided with threads the bolts 42 may be used to tighten the handle 1 to the branch part 34.

According to the above mentioned the handle 1 having rigid core 2 and the gel member 4 may be attached top a hand tool with mechanical attachment means. Preferably the attachment means are arranged to engage to the rigid core 2. In that case the attachment means may displace the gel material locally for engagement with the rigid core 2.

The present invention further relates to a method for manufacturing a handle 1 of a hand tool the handle comprising a rigid core 2 and one more gel members 4 on at least part of the core member 2. The manufacturing method comprises providing a rigid core 2 having one or more projections 6 and/or cavities 14 forming one or more undercuts 12 and forming one or more gel members 4 on the rigid core 2 such that the one or more gel members 4 fill at least one of the one or more the undercuts 12 for boding the one or more gel members 4 and the rigid core 2 mechanically together. The method may further comprise providing an outer cover layer 18 on the one or more gel members 4 for encapsulating the one or more gel members 4. The method is provided to produce any handle having a rigid core 2 and one or more gel members 4 as described above in connection with figures 1 to 7.

In the manufacturing method the handle 1 is manufactured utilizing a tooling (not shown) designed for the handle 1. The tooling having a mould cavity in which the handle is manufactured. First a film is formed on at least a part of the surface of the mould cavity for forming an outer cover layer 18 on the one ore more gel members 4. The outer cover layer 18 may be formed by painting or spraying. It should be noted, that the forming of the outer cover layer 18 may also be omitted.

Then gel material is poured into the mould cavity for providing one or more gel members 4. A predetermined amount of gel material is poured into the mould cavity. When the predetermined amount of gel material is poured into the mould cavity, the rigid core 2 having one or more projections 6 and/or cavities 14 forming one or more undercuts 12 is placed into the mould cavity such that the gel material fills at least one of the one or more the undercuts 12 for boding the gel material and the rigid core 2 mechanically together. Alternatively the gel material may be poured in to the mould cavity after the rigid core 2 is placed in to the mould cavity. Furthermore, the rigid core 2 may be provided with an adhesive layer 20 before placing the rigid core 2 into the mould cavity for enhancing the bonding between the rigid core 2 and the gel member 4.

After the gel material and the rigid core 2 are poured and placed, respectively, in to the mould cavity the tooling with the gel material and rigid core is placed into an oven for heat treatment of the handle 1. Preferably the handle is heat treated at about 75 °C. After the heat treatment the tooling is disassembled and the finished handle 1 is removed from the tooling.

It should be noted that other kinds of tooling may also be used in the manufacturing process and furthermore tooling may be adapted for manufacturing a handle having gel member 4on only a part of the surface of the rigid core 2.

It will be obvious to a person skilled in the art that, as the technology advances, the inventive concept can be implemented in various ways. The invention and its embodiments are not limited to the examples described above but may vary within the scope of the claims.

## Claims

1. A handle of a hand tool, the handle comprising a rigid core (2) and one or more gel members (4) on at least part of the core member (2), **characterized in that** the one or more gel members (4) and the rigid core (2) are mechanically bonded together for securing the one or more gel members (4) to the rigid core (2), said mechanical bond comprising flanges (10) which are connected to the rigid core (2) and which extend transversely to the normal of a surface (19) of the gel member (4).

2. A handle according to claim 1, **characterized in that** rigid core (2) comprises one or more projections (6) projecting outwards from the surface (8) of the rigid core (2) into the one or more gel members (4) for providing a mechanical bond between the rigid core (2) and the one or more gel members (4).

3. A handle according to claim 2, **characterized in that** the projections (6) and the flanges (10) that extend transversely from the projections (6) are provided to form undercuts (12) which the one or more gel elements (4) fill for providing a mechanical bond between the rigid core (2) and the one or more gel members (4).

4. A handle according to claim 1, **characterized in that** the rigid core (2) comprises one or more cavities (14) extending into the rigid core (2) from the surface (16) of the rigid core (2), the cavities (14) being filled by the one or more gel members (4) for providing a mechanical bond between the rigid core (2) and the one or more gel members (4).

5. A handle according to claim 4, **characterized in that** the cavities (14) and the flanges (10) are provided to form undercuts (12) which the one or more gel elements (4) fill for providing a mechanical bond between the rigid core (2) and the one or more gel members (4).

6. A handle according to any one of claims 2 to 5, **characterized in that** the handle is an elongated handle having a longitudinal axis, and that the projections (6) and/or the cavities (14) extend substantially parallel with the longitudinal axis of the handle.

7. A handle according to any one of claims 1 to 6, **characterized in that** the rigid core (2) is manufactured of material selected from the group consisting of plastics, metals, glass fibres, ceramics, aluminium, polypropylene, glass fibre or composite comprising polypropylene and glass fibre or a combination of one or more thereof.

8. A handle according to any one of claims 1 to 7, **characterized in that** the one or more gel members (4) are manufactured of material selected from the group consisting of urethane, polyurethane, silicon and/or other polymer based gel material.

9. A handle according to any one of claims 1 to 8, **characterized in that** one or more gel members (4) are provided with an outer cover layer (18) for encapsulating the one or more gel members (4).

10. A handle according to claim 9, **characterized in that** outer cover layer (18) has lower friction than the one or more gel members (4).

11. A handle according to claim 9 or 10, **characterized in that** the outer cover layer (18) is manufactured of material selected from the group consisting of urethane, polyurethane, silicon and/or other polymer based material.

12. A handle according to any one of claims 1 to 11, **characterized in that** there is provided an adhesive layer (20) between rigid core (2) and the one or more gel members (4) for enhancing the bonding between the rigid core (2) and the one or more gel members (4).

13. A method for manufacturing a handle of a hand tool the handle comprising a rigid core (2) and one more gel members (4) on at least part of the core member (2), **characterized in that** the method comprising:
- providing a rigid core (2) having at least one or more projections (6) or cavities (14) and having flanges (10) which extend transversely to the normal of a surface (19) of a gel member (19) to be produced on said rigid core, said projections, cavities and flanges forming one or more undercuts (12);
- forming one or more gel members (4) on the rigid core (2) such that the one or more gel members (4) fill at least one of the one or more the undercuts (12) for bonding the one or more gel members (4) and the rigid core (2) mechanically together.

14. A method according to claims 13, **characterized by** manufacturing the handle in a tooling having a mould cavity, the method comprising:
- forming a film on at least a part of the surface of the mould cavity for forming an outer cover layer (18) on the one ore more gel members (4);
- pouring gel material into the mould cavity for providing one or gel members (4); and
- placing a rigid core (2) having one or more projections (6) and/or cavities (14) forming one or more undercuts (12) into the mould cavity such that the gel material fills at least one of the one or more the undercuts (12) for boding the gel material and the rigid core (2) mechanically together.

15. A method according to claim 14, **characterized by** forming the outer cover layer (18) by painting or spraying.

16. A method according to claim 14 or 15, **characterized by** pouring the gel material before or after placing the rigid core (2) into the mould cavity.

17. A method according to any one of claims 14 to 16, **characterized by** providing the rigid core (2) with an adhesive layer (20) before placing the rigid core (2) into the mould cavity.

18. A method according to any one of claims 14 to 17, **characterized by** placing the tooling into an oven for heat treatment of the handle.
